# EUROPEAN PATENT SPECIFICATION

(11) **EP 3 065 413 B1**
(45) Date of publication and mention of the grant of the patent: **28.08.2019**
(21) Application number: 16156883.7
(22) Date of filing: 23.02.2016
(51) Int. Cl.: H04N 21/422, H04N 21/414, H04N 21/4402, H04N 21/4728

(54) **MEDIA STREAMING SYSTEM AND CONTROL METHOD THEREOF**
MEDIENSTREAMINGSYSTEM UND STEUERUNGSVERFAHREN DAFÜR
SYSTÈME DE TRANSMISSION MULTIMÉDIA EN CONTINU ET SON PROCÉDÉ DE COMMANDE

(30) Priority: 05.03.2015 US 201562128520 P; 10.11.2015 US 201514936698
(43) Date of publication of application: 07.09.2016
(73) Proprietor: HTC Corporation, Taoyuan City 330 (TW)
(72) Inventor: Wang, Yuan-Kang, 330 Taoyuan City (TW); Chang, Yu-Hsien, 330 Taoyuan City (TW); Wu, Jing-Lung, 330 Taoyuan City (TW)
(74) Representative: Murgitroyd & Company

(56) References cited:
- US-A1- 2003 086 003
- US-A1- 2006 279 542
- US-A1- 2014 145 935
- ADITYA MAVLANKAR ET AL: "An interactive region-of-interest video streaming system for online lecture viewing", PACKET VIDEO WORKSHOP (PV), 2010 18TH INTERNATIONAL, IEEE, 13 December 2010 (2010-12-13), pages 64-71, XP031899005, DOI: 10.1109/PV.2010.5706821 ISBN: 978-1-4244-9522-1

## Description

### RELATED APPLICATIONS

### BACKGROUND

### Field of Invention

The present application relates to a video system. More particularly, the present application relates to a real-time video streaming system and a control method thereof.

### Description of Related Art

Recently, technologies of digital cameras, video cameras, cam recorders and other video recorders are highly developed. Resolutions of aforesaid image/video cameras are advanced from VGA (640x480), HD (1280x720, 720p) to FHD (1920x1080, 1080p) and even 4K2K (3820x2160, 2160p). FHD and 4K2K resolutions can provide more details about the scene, such that the observer can have better experience while watching the images/videos with high resolutions. However, high resolutions mean more pixel data in each frame. The raw data of 4K2K video requires a large transmission bandwidth to be transmitted from a video camera and a monitor. This large transmission bandwidth can be established by a physical wiring, but hard to be realized over a wireless communication.

Users love to see the real-time scene (e.g., ballgames, fashion shows, children activities). The interested scene can be recorded and broadcasted under high resolution, but to transmit videos or streaming videos over wireless communication (e.g., cellular telephony network) will occupy a large bandwidth of the wireless connection. Mavlankar, A. et al, "An interactive region-of-interest video streaming system for online lecture viewing", DOI: 10.1109/PV.2010.5706821 may be regarded ad background art useful for understanding the invention.

### SUMMARY

An object of the present disclosure is to provide a real-time video streaming system and a control method thereof for optimizing the transmission bandwidth usage by selecting and transmitting a partial frame from the whole frame recorded or stored by the media source. This object can be achieved by the features of the claims.

A media streaming method for transmitting media content over a network, comprising: providing the media content with a first resolution (RES1) by a media source (140); generating a gesture command by a displayer device (120) and transmitting the gesture command to the media source (140); extracting a partial frame (PF) with the second resolution (RES2) from the media content with the first resolution (RES1) according to the gesture command, a relative location of the partial frame (PF) in the media content being determined by the gesture command; and transmitting the partial frame (PF) with the second resolution (RES2) from the media source to the displayer device (120); and the media streaming method is further characterised by transmitting data of the media content in a buffer area (BA) only surrounding the partial frame (PF) from the media source to the displayer device along with the partial frame (PF) wherein the media source comprises a plurality of camera devices (140a-140d), the camera devices are located at different positions in a scene, the camera devices capture a plurality of media contents from different visual angle relative to the scene, each of the media contents is captured with the first resolution; the media streaming method further comprising: having a radiation indicator (160) at a fixed position; receiving, by a plurality of radiation sensors (128) disposed on different spots on a virtual reality headset, the displayer device (120) being the virtual reality headset, a radiation from the radiation indicator at different time stamps; calculating, by the plurality of radiation sensors (128), a spatial relationship of the displayer device according to the time stamps; wherein the operations of extracting the partial frame (PF) and transmitting the partial frame are performed by: selecting one of the camera devices (140a-140d) of the media source according to the spatial relationship; extracting the partial frame according to the gesture command by the selected one of the camera devices; and transmitting the partial frame from the selected one of the camera devices to the displayer device.

The disclosure provides a non-transitory computer readable storage medium with a computer program to execute the above method. Other embodiments described herein are not part of the invention.

It is to be understood that both the foregoing general description and the following detailed description are by examples, and are intended to provide further explanation of the invention as claimed.

### BRIEF DESCRIPTION OF THE DRAWINGS

The accompanying drawings illustrate presently exemplary embodiments of the disclosure and serve to explain, by way of example, the principles of the disclosure.
FIG. 1 is a schematic diagram illustrating a media streaming system according to embodiments of the disclosure.
FIG. 2A is a schematic diagram illustrating the displayer device and the media source of the media streaming system in FIG. 1.
FIG. 2B is a schematic diagram illustrating the media content provided by the media source in FIG. 2A.
FIG. 3 is a flowchart diagram illustrating a media streaming method according to an embodiment of the disclosure.
FIG. 4A is a schematic diagram illustrating some other embodiments of the media streaming system in FIG. 1.
FIG. 4B is a schematic diagram illustrating the media content provided by the media source shown in FIG. 4A.
FIG. 5 is a schematic diagram illustrating a media content provided by the media source according to some embodiments.
FIG. 6 is a schematic diagram illustrating another embodiment of the displayer device and the media source of the media streaming system in FIG. 1.
FIG. 7 is a flowchart diagram illustrating a media streaming method according to an embodiment of the disclosure.
FIG. 8 is a flowchart diagram illustrating a media streaming method according to an embodiment of the disclosure.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

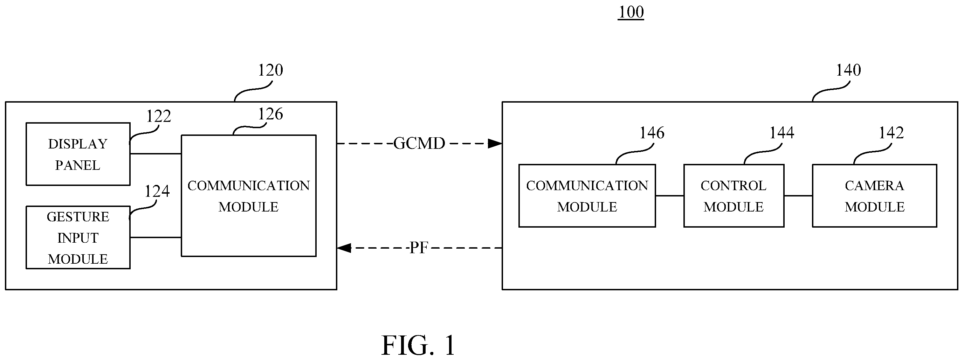

Reference is made to FIG. 1, which is a schematic diagram illustrating a media streaming system 100 according to embodiments of the disclosure. The media streaming system 100 includes a displayer device 120 and a media source 140. The media source 140 is configured to provide a media content. The displayer device 120 is communicatively connected with the media source 140. The media source 140 is able to transmit the media content in a streaming way to the displayer device 120, such that the displayer device 120 is able to display the media content.

The displayer device 120 includes a display panel 122, a gesture input module 124 and a communication module 126. In some embodiments, the displayer device 120 is a mobile phone, a tablet computer, a television, a personal computer or any equivalent electronic apparatus with a displaying component.

In some embodiments, the media source 140 can be a digital camera, a versatile camera, a sport camera, a 360-degree sphere camera or a combination of multiple cameras. In these cases, the media source 140 includes a camera module 142, a control module 144 and a communication module 146 as shown in FIG. 1. The camera module 142 is configured for recording a video or a streaming video. A full frame of the video captured by the camera module 142 has a first resolution, e.g., 4K2K (3840x2160).

In some other embodiments, the media source 140 is a video storage database, and a storage unit (not shown in figures) of the media source 140 stores video files with the first resolution.

In other words, the media source 140 is configured to provide a media content with the first resolution by recording a streaming video or providing an existed video file.

The communication module 126 of the displayer device 120 and the communication module 146 of the media source 140 are communicatively connected to each other, such that data or information can be exchanged between the displayer device 120 and the media source 140. In some embodiments, the communication module 126 and the communication module 146 are local communication modules (e.g., WiFi direct, Zigbee, Bluetooth, etc) and the displayer device 120 and the media source 140 are wireless connected in a direct way. In some embodiments, the communication module 126 and the communication module 146 are telecommunication modules (e.g., WiFi, 3G, 4G, LTE, etc) and the displayer device 120 and the media source 140 are wireless connected over a telecommunication network.

In some embodiments, the control module 144 of the media source 140 is a processor, a central processing unit, a graphic processing unit or any equivalent circuit component.

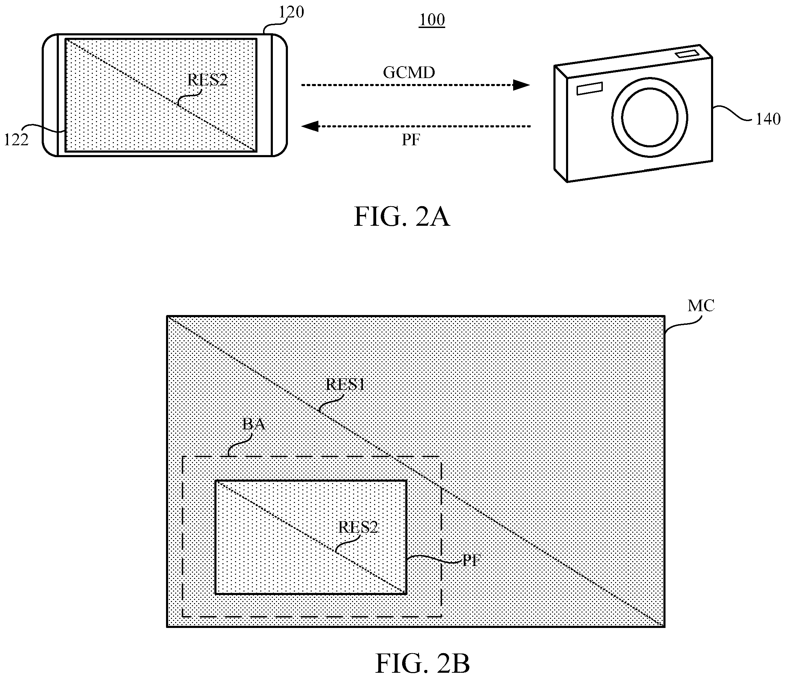

Reference is also made to FIG. 2A and FIG. 2B. FIG. 2A is a schematic diagram illustrating the displayer device 120 and the media source 140 of the media streaming system 100 in FIG. 1. FIG. 2B is a schematic diagram illustrating the media content MC provided by the media source 140 in FIG. 2A.

In some embodiments, the media source 140 is capable of recording a video or a streaming video as the media content MC. The media content MC is provided with the first resolution RES1, as shown in FIG. 2B. The display pane! 122 of the displayer device 120 is suitable to display with a second resolution RES2, e.g., FHD (1920x1080). The first resolution RES1 of the media content MC on the media source is higher than the second resolution displayed on the displayer.

It is noted that the second resolution and the first resolution are not limited to this specific values (number of pixels like 1920x1080 for FHD and 3840x2160 for 4K2K). These values are mentioned for demonstration. The first resolution RES1 is higher than the second resolution RES2, and any combination of the first resolution RES1 and the second resolution RES2 are suitable in this disclosure.

In a conventional way of streaming video broadcasting, raw data (the full frame) of the streaming video recorded or stored by the media source will be transmitted from the media source to the displayer device. It requires a large transmission bandwidth to transmit these data. The displayer device must receive, decode and converts the raw data of the full frame into a suitable format to be displayed on the displayer device. Bandwidth, time, computation resource is wasted to transmit and process these raw data in the conventional way.

As shown in FIG. 2B of this disclosure, a partial frame PF with the second resolution RES2 is extracted from the full frame of the media content MC with the first resolution RES1, and the extracted partial frame PF is transmitted from the media source 140 to the displayer device 120, so as to prevent the wastes of bandwidth, time and computation resource. The location of the partial frame PF is selected according to the observer's interests. In some embodiments, a gesture command GCMD is detected by the displayer device 120 to indicate the observer's interests.

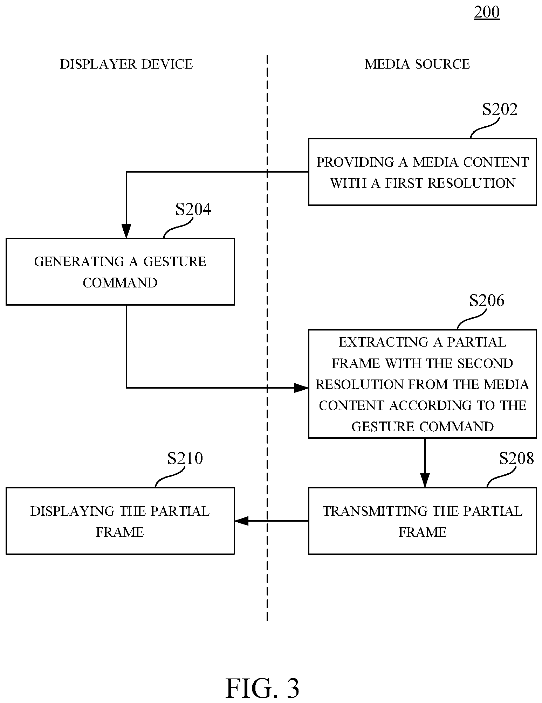

Reference is also made to FIG. 3, which is a flowchart diagram illustrating a media streaming method 200 according to an embodiment of the disclosure. The media streaming method 200 is suitable for the media streaming system 100. As shown in FIG. 3, operation S202 is performed to provide the media content MC with the first resolution RES1 by the media source 140. Operation S204 is performed to generate a gesture command GCMD by the displayer device 120.

In some embodiments, the gesture input module 124 of the displayer device 120 includes at least one of a touch panel, a motion sensor (a gyro sensor, a g-sensor, an e-compass, etc), an eye-tracking unit and a microphone for generating the gesture command GCMD.

In some embodiments, the gesture input module 124 includes the touch panel, such that the user can slide on the touch panel to a right side, a left side, a top side or a bottom side, and correspondingly the gesture command GCMD will be generated. The gesture command GCMD is sent from the displayer device 120 to the media source 140. In response to the gesture command GCMD, the control module 144 is configured to extract the partial frame PF from the media content MC according to the gesture command GCMD, such that the gesture command GCMD triggers the control module 144 to adjust the partial frame PF move to the right side, the left side, the top side and the bottom side in the full frame of the media content MC.

In some embodiments, the gesture input module 124 includes the motion sensor (a gyro sensor, a g-sensor, an e-compass, etc), such that the user can rotate, shift, move or flip the displayer device 120 to different directions and the motion sensor can detect a movement of the displayer device 120, and correspondingly generate the gesture command GCMD. The gesture command GCMD is sent from the displayer device 120 to the media source 140. In response to the gesture command GCMD, the control module 144 is configured to adjust the partial frame PF, which is moved to a direction corresponding to the movement indicated by the gesture command GCMD. For illustration, the displayer device 120 is rotated to the right side, and then the partial frame PF is moved to the right side in the full frame of the media content MC.

In some embodiments, the gesture input module 124 includes the eye-tracking unit. For illustration, the eye-tracking unit is realized by a front camera of the displayer device 120, and the front camera is activated to capture and track the eye-balls of the user. When the user moves their eyes to stare at a specific point and the eye-tracking unit can track the eyes, and correspondingly generates the gesture command GCMD. The gesture command GCMD is sent from the displayer device 120 to the media source 140. In response to the gesture command GCMD, the control module 144 is configured to move a center of the partial frame PF toward where the eyes stare.

In some embodiments, the gesture input module 124 includes the microphone, which is utilized to record a voice-based order as the gesture command GCMD. The gesture command GCMD is sent from the displayer device 120 to the media source 140. In response to the gesture command GCMD, the control module 144 adjusts the partial frame PF according to the voice-based order.

Based on aforesaid embodiments, a relative location of the partial frame PF in the media content MC is determined by the gesture command GCMD. Operation S206 is performed to extract the partial frame PF with the second resolution RES2 from the full frame of the media content MC according to the gesture command GCMD. It is noted that the partial frame PF is dynamically changed over time according to the gesture command GCMD.

After the partial frame PF is extracted by the control module 144, operation S208 is performed to transmit data of the partial frame PF from the media source 140 to the displayer device 120. Operation S210 is performed to display the data of the partial frame PF on the display panel 122 of the displayer device 120.

In some embodiments, when the media content MC is a static image, the data of the partial frame PF includes a portion of the static image. When the media content MC is a video or a streaming video, the data of the partial frame PF includes a series of partial frames PF of the video or the streaming video over time, and the locations of these partial frames PF are dynamically adjusted according to the gesture command GCMD.

Once the gesture command GCMD is sent from the displayer device 120 to the media source 140, the control module 144 of the media source 140 is configured to adjust the partial frame PF to the position ordered by the gesture command GCMD, and the re-allocated partial frame PF will be transmitted in the streaming video to the displayer device 120 in real time. Therefore, the observer can always observe the scene of his interests on the displayer device 120.

In order to elevate the reaction speed of the partial frame PF adjustment, a surrounding area adjacent to the current partial frame PF is regarded as a buffer area BA (as shown in FIG. 2B). In some embodiments, the pixel data in the buffer area BA will be transmitted from the media source 140 to the displayer device 120 along with the partial frame PF. Once the user re-assigns the target of the partial frame PF by moving a little bit to the right, left, top or bottom side, the displayer device 120 is able to show the new target of the partial frame PF right away by combining the original partial frame PF and data in the buffer area BA. Therefore, the new target of the partial frame PF on the displayer device 120 can be moved in real-time of observer's interest without causing a long delay time.

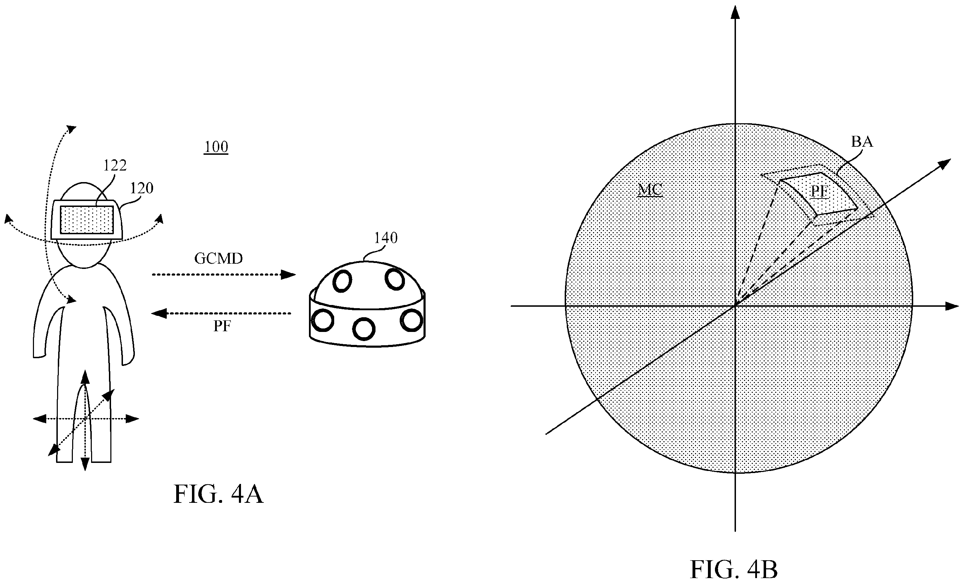

Reference is made to FIG. 4A and FIG. 4B. FIG. 4A is a schematic diagram illustrating some other embodiments of the media streaming system 100 in FIG. 1. FIG. 4B is a schematic diagram illustrating the media content provided by the media source 140 shown in FIG. 4A. The media streaming system 100 includes a displayer device 120 and a media source 140. For illustration, the displayer device 120 is a wearable displayer device, such as a virtual reality (VR) headset (as shown in the embodiments of FIG. 4A). The virtual reality headset is realized by a stand-alone VR device or a combination of a smartphone and a VR headset attachment. For illustration, the media source 140 shown in FIG. 4A is a 360-degree sphere camera.

The displayer device 120 is suitable to display with a second resolution RES2, e.g., FHD (1920x1080). The media source 140, for illustration, is a 360-degree sphere camera, a panorama camera or a combination of multiple cameras for recording a full frame with the first resolution. The media source 140 is capable of recording a media content MC with a first resolution RES1 e.g., 4K2K (3840x2160). In this embodiment, the media source is able capture the scene along 360-degree visual degrees. The first resolution RES1 recorded by the media source is higher than the second resolution RES2 displayed on the displayer device 120. However, the first resolution RES1 and the second resolution RES2 are not limited to specific values (3840x2160 and 1920x1080).

In some other embodiments, the media source 140 can also be a video storage database, which stores video files with the first resolution RES1.

In some embodiments, a partial frame PF with the second resolution RES2 is extracted from the full frame of the media content MC with the first resolution RES1 according to a gesture command GCMD, and the extracted partial frame PF is transmitted from the media source 140 to the displayer device 120.

In some embodiments, the displayer device 120 includes the gesture input module 124 (referring to FIG. 1). The gesture input module 124 includes a motion sensor (a gyro sensor, a g-sensor, an e-compass, etc), an eye-tracking unit or a microphone. The gesture input module 124 is configured for generating the gesture command GCMD.

In some embodiments, the gesture input module 124 includes the eye-tracking unit. For illustration, the eye-tracking unit is realized by a front camera of the displayer device 120, and the front camera is activated to capture and track the eye-balls of the user. When the user moves their eyes to stare at a specific point and the eye-tracking unit can track the eyes, and correspondingly generates the gesture command GCMD. The gesture command GCMD is sent from the displayer device 120 to the media source 140. In response to the gesture command GCMD, the control module 144 is configured to move a center of the partial frame PF toward where the eyes stare. In some embodiments, the motion sensor of the gesture input module 124 is able to detect that that user lifts, rotates or bows his/her head as well as the user steps forward, backward, to the right side or to the left side. In some embodiments, the gesture command GCMD is generated by a combination of a detection result of the eye-tracking unit and a detection result of the motion sensor. For example, the user stepping three steps forward, lifting up his head and rolling his eyes to the right side is detected by the motion sensor and the eye-tracking unit and integrated as the gesture command GCMD.

Further details about how to generate the gesture command GCMD by the motion sensor, the eye-tracking unit or the microphone are disclosed in aforesaid embodiments, and not to be repeated here.

Once the gesture command GCMD is sent from the displayer device 120 to the media source 140, the media source 140 can adjust the partial frame PF to the position ordered by the gesture command GCMD, and the re-allocated partial frame PF will be transmitted in the streaming video to the displayer device 120 in real time. Therefore, the observer can always observe the scene of his interests on the displayer device 120.

It is noted that, the displayer device 120 as illustrated in FIG. 4A is the virtual reality (VR) headset, and the media source 140 as illustrated in FIG. 4A is a 360-degree sphere camera. The 360-degree sphere camera is configured to record the media content MC with a sphere-shaped frame as illustrated in FIG. 4B.

In an embodiment, the partial frame PF displayed on the display panel 122 covers all visible angles of the observer wearing the displayer device 120. In response to the observer move this head or rotate his body, the partial frame PF will be moved or adjusted (e.g., enlarge, trim) on the whole sphere-shaped frame recorded or stored by the media source 140, such that the observer feel like being in the scene corresponding to the media source 140.

In order to elevate the reaction speed of the partial frame PF adjustment, surrounding area adjacent to the current partial frame PF is regarded as buffer area BA. In some embodiments, the pixel data in the buffer area BA will be transmitted from the media source 140 to the displayer device 120 along with the partial frame PF.

In some embodiments, the partial frame PF is real-time adjusted according to the gesture command GCMD, and the partial frame PF is streaming transmitted to the displayer device 120 immediately. This real-time experience is suitable to be utilized on high-end devices with powerful processors. For example, the partial frame PF is adjusted according to a head movement of the user detected by the motion sensor, a body movement (e.g., stepping forward, backward, to the right or to the left) of the user detected by the motion sensor, an eye movement (e.g., a staring position of user's eye) detected by the eye-tracking unit, a voice command detected by the microphone, or a combination of at least two of aforesaid detection results.

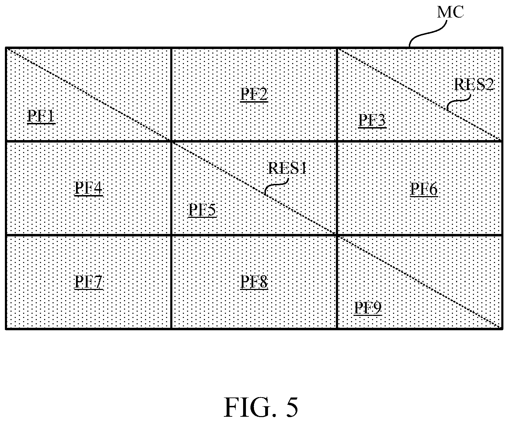

In some practical applications of some low-end devices with limited computation ability, adjusting the partial frame dynamically will consume too much electricity or overload their processors. On these low-end devices, the full frame of the media contents on the media source 140 is divided into several partial frame files. Reference is made to FIG. 5, which is a schematic diagram illustrating a media content MC provided by the media source 140 according to some embodiments.

As illustrated in FIG. 5, the full frame of the media content MC with the first resolution RES1 is divided into several partial frames with the second resolution RES2. In FIG. 5, there are nine partial frames PF1-PF9. Each of the partial frames PF1-PF9 is a different portion of the media content MC.

In response to the gesture command GCMD, one of the partial frame files is selected by the control module 144 according to the gesture command GCMD, the selected one of the partial frame files PF1-PF9 is transmitted from the media source 140 to the displayer device 120, such that the low end device is able to perform the media streaming method 200 in this disclosure. These partial frames PF1-PF9 is located side-by-side (as shown in FIG. 5), or partially overlapped with each other (not shown in figures).

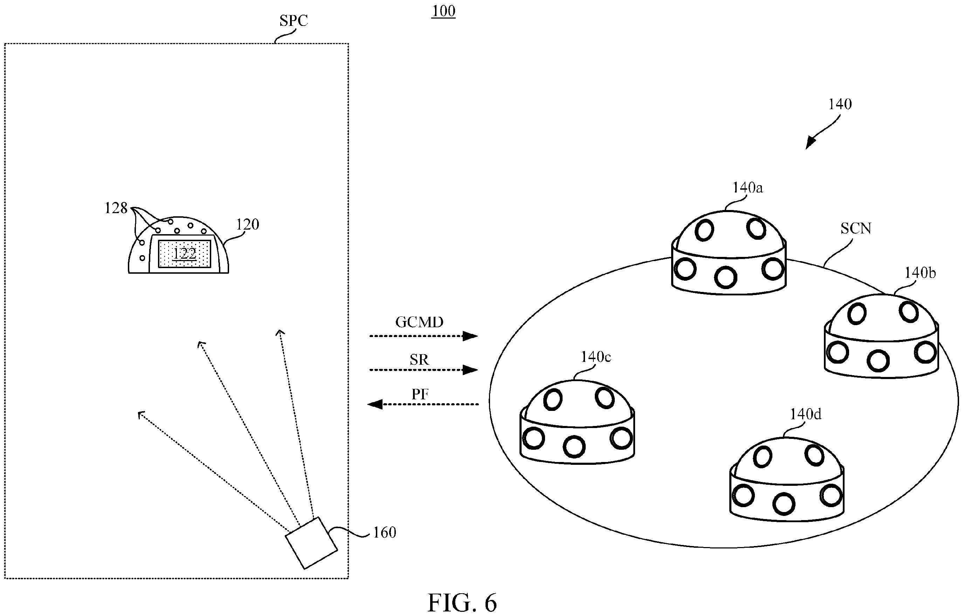

In the embodiments illustrated in FIG. 4A and FIG. 4B, the media source 140 includes one 360-degree sphere camera. The 360-degree sphere camera is located at a fixed position of the sense. When the user walks to different locations, the partial frame PF is zoomed in/out to simulate the walking movement of the user. However, if the user walks to a far distance from the origin, it is hard to cover the visual angle of the user by only one 360-degree sphere camera. Reference is also made to FIG. 6, which is a schematic diagram illustrating another embodiment of the displayer device 120 and the media source 140 of the media streaming system 100 in FIG. 1.

As shown in FIG. 6, the media source 140 includes several camera devices. There are four camera devices 140a, 140b, 140c and 140d for illustration. However, the disclosure is not limited to four camera devices. The camera devices 140a, 140b, 140c and 140d are located at different positions in a scene SCN. The camera devices 140a, 140b, 140c and 140d capture media contents MC from different visual angle relative to the scene SCN. Each of the media contents MC is captured with the first resolution RES1 (referring to FIG. 4B).

As shown in FIG. 6, the displayer device 120 is a virtual reality headset. The displayer device 120 includes a display panel 122, a gesture input module 124 (referring to FIG. 1) and a communication module 126 (referring to FIG. 1), and the displayer device 120 further includes a positioning module 128 illustrated in FIG. 6. The positioning module 128 is configured for sensing a spatial relationship SR of the virtual reality headset within a space SPC.

For illustration, there are at least one radiation indicator 160 implemented at a fixed position in the space SPC. The positioning module 128 includes a plurality of radiation sensors disposed on different spots on the virtual reality headset. The radiation sensors are gapped from each others. The radiation sensors will receive a radiation from the radiation indicator 160 at different time stamps. The positioning module 128 is able to calculate the spatial relationship SR of the virtual reality headset within the space SPC according to the time stamps marked by different radiation sensors and the gapping distances between the radiation sensors. Aforesaid embodiment of the positioning module 128 is for illustration. In practices, a distance sensor, a GPS receiver or any equivalent positioning circuit can be utilized as the positioning module 128.

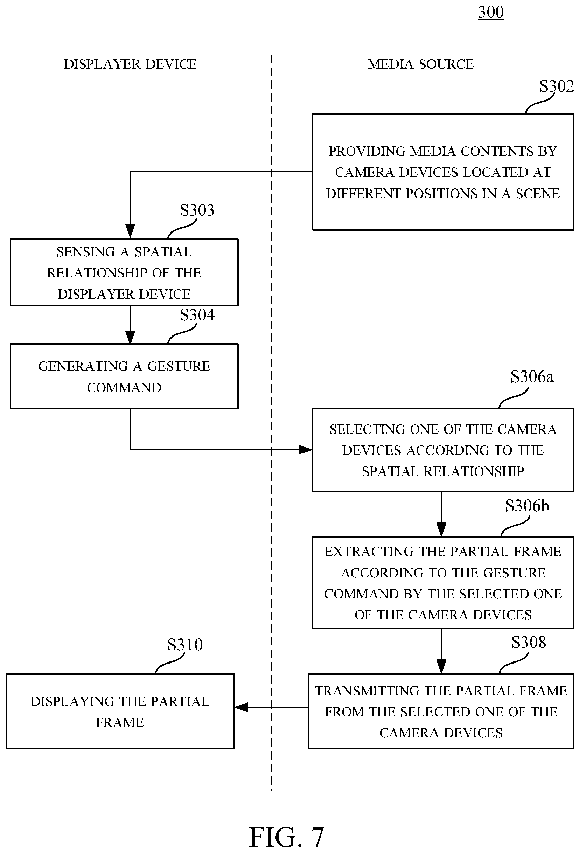

Reference is also made to FIG. 7, which is a flowchart diagram illustrating a media streaming method 300 according to an embodiment of the disclosure.

Operation S302 is performed to provide media contents by the camera devices 140a-140d of the media source 140. The camera devices 140a-140d is located at different position in the scene SCN.

Operation S303 is performed to sense the spatial relationship SR of the displayer device 120 in the space SPC by the positioning module 128 as disclosed above.

Operation S304 is performed to generate a gesture command GCMD by the gesture input module 124 of displayer device 120. Details about how to generate the gesture command GCMD have been disclosed in aforesaid embodiments.

The spatial relationship SR and the gesture command GCMD are sent to the media source 140. A controller (not shown in figures) of the media source 140 or one coordinator of the camera devices 140a-140d receives the spatial relationship SR and the gesture command GCMD. Operation S306a is performed to select one of the camera devices 140a-140d according to the spatial relationship SR. The one of the camera devices 140a-140d in the scene SCN is selected to match the relationship SR of the displayer device 120 in the space SPC. If the displayer device 120 is moved to the front end on the right side of the space SPC, the camera device 140b is selected. If the displayer device 120 is moved to the near end on the left side of the space SPC, the camera device 140c is selected. The gesture command GCMD is processed by the selected one of the camera devices 140a-140d.

Operation S306b is performed to extract the partial frame PF according to the gesture command GCMD. Operation S308 is performed to transmit the partial frame PF from the selected one of the camera devices 140a-140d to the displayer device 120, e.g., the virtual reality headset. Operation S310 is performed to display the partial frame PF.

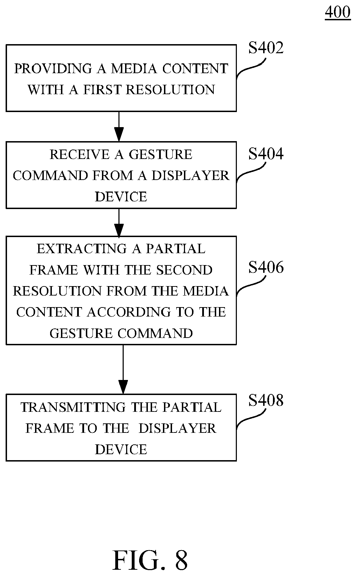

Reference is also made to FIG. 8, which is a flowchart diagram illustrating a media streaming method 400 according to an embodiment of the disclosure. The media streaming methods 200, 300 and 400are able to be executed by a computer program of a non-transitory computer readable storage medium.

Operation S402 is performed to provide a media content MC with a first resolution RES1. Operation S404 is performed to receive a gesture command GCMD from a displayer device 120. Operation S406 is performed to extract a partial frame PF with the second resolution RES2 from the media content MC according to the gesture command GCMD. A relative location of the partial frame PF in the media content MC is determined by the gesture command. The second resolution RES2 is lower than the first resolution RES1. Operation S408 is performed to transmit the partial frame PF to the displayer device 120.

Based on aforesaid embodiments, the media source in the media streaming system is able to transmit the partial frame with a specific resolution corresponding to the displayer device. Therefore, the bandwidth will not be wasted on transmitting some extra data which are not interested by the user of the displayer device. Once the user of the displayer device conducts a gesture input, the partial frame is adjusted accordingly.

Although the present invention has been described in considerable detail with reference to certain embodiments thereof, other embodiments are possible.

It will be apparent to those skilled in the art that various modifications and variations may be made to the structure of the disclosed embodiments without departing from the scope of the disclosure.

## Claims

1. A media streaming method for transmitting media content over a network, comprising:
providing the media content with a first resolution (RES1) by a media source (140);
generating a gesture command by a displayer device (120) and transmitting the gesture command to the media source (140);
extracting a partial frame (PF) with the second resolution (RES2) from the media content with the first resolution (RES1) according to the gesture command, a relative location of the partial frame (PF) in the media content being determined by the gesture command; and
transmitting the partial frame (PF) with the second resolution (RES2) from the media source to the displayer device (120); and
the media streaming method is further **characterised by**
transmitting data of the media content in a buffer area (BA) only surrounding the partial frame (PF) from the media source to the displayer device along with the partial frame (PF);
wherein the media source comprises a plurality of camera devices (140a-140d), the camera devices are located at different positions in a scene, the camera devices capture a plurality of media contents from different visual angle relative to the scene, each of the media contents is captured with the first resolution;
the media streaming method further comprising:
having a radiation indicator (160) at a fixed position;
receiving, by a plurality of radiation sensors (128) disposed on different spots on a virtual reality headset, the displayer device (120) being the virtual reality headset, a radiation from the radiation indicator at different time stamps;
calculating, by the plurality of radiation sensors (128), a spatial relationship of the displayer device according to the time stamps;
wherein the operations of extracting the partial frame (PF) and transmitting the partial frame are performed by:
selecting one of the camera devices (140a-140d) of the media source according to the spatial relationship;
extracting the partial frame according to the gesture command by the selected one of the camera devices; and
transmitting the partial frame from the selected one of the camera devices to the displayer device.

2. A non-transitory computer readable storage comprising a computer program configured to perform all the steps of the method of claim 1, when said computer program is executed on a computer means.

## Patentansprüche

1. Ein Medien-Streaming-Verfahren zum Übertragen von Medieninhalt über ein Netzwerk, das Folgendes beinhaltet:
Bereitstellen einer ersten Auflösung (RES1) für den Medieninhalt durch eine Medienquelle (140);
Erzeugen eines Gestenbefehls durch eine Anzeigevorrichtung (120) und Übertragen des Gestenbefehls an die Medienquelle (140):
Extrahieren eines Teil-Frames (PF) mit der zweiten Auflösung (RES2) aus dem Medieninhalt mit der ersten Auflösung (RES1) gemäß dem Gestenbefehl, wobei eine relative Position des Teil-Frames (PF) in dem Medieninhalt durch den Gestenbefehl bestimmt wird; und
Übertragen des Teil-Frames (PF) mit der zweiten Auflösung (RES2) von der Medienquelle an die Anzeigevorrichtung (120); und
wobei das Medien-Streaming-Verfahren weiter durch Folgendes gekennzeichnet ist:
Übertragen von Daten des Medieninhalts in einem Pufferbereich (BA), der nur den Teil-Frame (PF) umgibt, von der Medienquelle an die Anzeigevorrichtung zusammen mit dem Teil-Frame (PF);
wobei die Medienquelle eine Vielzahl von Kameravorrichtungen (140a-140d) beinhaltet, wobei die Kameravorrichtungen an unterschiedlichen Positionen in einer Szene angeordnet sind, wobei die Kameravorrichtungen eine Vielzahl von Medieninhalten aus unterschiedlichen Blickwinkeln relativ zu der Szene erfassen, wobei jeder der Medieninhalte mit der ersten Auflösung erfasst wird;
wobei das Medien-Streaming-Verfahren weiter Folgendes beinhaltet:
einen Strahlungsindikator (160) an einer ortsfesten Position;
Empfangen, durch eine Vielzahl von Strahlungssensoren (128), die sich an unterschiedlichen Stellen auf einem Virtual-Reality-Headset befinden, wobei die Anzeigevorrichtung (120) das Virtual-Reality-Headset ist, einer Strahlung von dem Strahlungsindikator zu unterschiedlichen Zeitstempeln;
Berechnen, durch die Vielzahl von Strahlungssensoren (128), einer räumlichen Beziehung der Anzeigevorrichtung gemäß den Zeitstempeln;
wobei die Vorgänge des Extrahierens des Teil-Frames (PF) und des Sendens des Teil-Frames ausgeführt werden durch:
Auswählen einer der Kameravorrichtungen (140a-140d) der Medienquelle gemäß der räumlichen Beziehung:
Extrahieren des Teil-Frames gemäß dem Gestenbefehl durch die ausgewählte der Kameravorrichtungen; und
Übertragen des Teil-Frames von der ausgewählten der Kameravorrichtungen an die Anzeigevorrichtung.

2. Ein nichtflüchtiger computerlesbarer Speicher, der ein Computerprogramm beinhaltet, das zum Ausführen aller Schritte des Verfahrens gemäß Anspruch 1 konfiguriert ist, wenn das Computerprogramm auf einem Computermittel ausgeführt wird.

## Revendications

1. Un procédé de diffusion multimédia en continu pour transmettre un contenu multimédia sur un réseau, comprenant :
le fait de fournir le contenu multimédia avec une première résolution (RES1) par le biais d'une source multimédia (140) ;
le fait de générer une commande gestuelle par le biais d'un dispositif afficheur (120) et de transmettre la commande gestuelle à la source multimédia (140) ;
le fait d'extraire un cadre partiel (PF) avec la deuxième résolution (RES2) du contenu multimédia avec la première résolution (RES1) selon la commande gestuelle, un emplacement relatif du cadre partiel (PF) dans le contenu multimédia étant déterminé par la commande gestuelle ; et
le fait de transmettre le cadre partiel (PF) avec la deuxième résolution (RES2) depuis la source multimédia jusqu'au dispositif afficheur (120) ; et
le procédé de diffusion multimédia en continu est en outre **caractérisé par** le fait de transmettre des données du contenu multimédia dans une zone tampon (BA) entourant uniquement le cadre partiel (PF) depuis la source multimédia jusqu'au dispositif afficheur conjointement avec le cadre partiel (PF) ;
dans lequel la source multimédia comprend une pluralité de dispositifs caméras (140a à 140d), les dispositifs caméras sont situés à différentes positions dans une scène, les dispositifs caméras capturent une pluralité de contenus multimédia depuis un angle visuel différent relativement à la scène, chacun des contenus multimédia est capturé avec la première résolution ;
le procédé de diffusion multimédia en continu comprenant en outre :
le fait d'avoir un indicateur de rayonnement (160) à une position fixe ;
le fait de recevoir, par le biais d'une pluralité de capteurs de rayonnement (128) disposés en des points différents sur un casque de réalité virtuelle, le dispositif afficheur (120) étant le casque de réalité virtuelle, un rayonnement provenant de l'indicateur de rayonnement à différentes estampilles temporelles ;
le fait de calculer, par le biais de la pluralité de capteurs de rayonnement (128), une relation spatiale du dispositif afficheur selon les estampilles temporelles ;
dans lequel les opérations consistant à extraire le cadre partiel (PF) et à transmettre le cadre partiel sont effectuées en :
sélectionnant un des dispositifs caméras (140a à 140d) de la source multimédia selon la relation spatiale ;
extrayant le cadre partiel selon la commande gestuelle par le biais du dispositif caméra sélectionné d'entre les dispositifs caméras ; et
transmettant le cadre partiel depuis le dispositif caméra sélectionné d'entre les dispositifs caméras au dispositif afficheur.

2. Une mémoire lisible par ordinateur non transitoire comprenant un programme informatique configuré pour effectuer toutes les étapes du procédé de la revendication 1, lorsque ledit programme informatique est exécuté sur un moyen informatique.
